# EUROPEAN PATENT SPECIFICATION

(11) **EP 1 369 307 B1**
(45) Date of publication and mention of the grant of the patent: **02.08.2006**
(21) Application number: 03010872.4
(22) Date of filing: 15.05.2003
(51) Int. Cl.: B60R 19/02, B60R 19/16, B65G 69/00

(54) **Buffer arrangement for damping shocks between means of transport, loading and unloading platforms, warehouse entrances and the like**
Puffereinrichtung zur Dämpfung von Stössen zwischen Transportmitteln, Lade- und Abladeflächen, Lagerhauseingängen und dergleichen
Dispositif butoir pour amortir les chocs entre moyens de transport, plate-formes de chargement et déchargement, entrées d'entrepôts et similaires

(30) Priority: 04.06.2002 IT TV20020022 U
(43) Date of publication of application: 10.12.2003
(73) Proprietor: Basso, Francesco, 31040 Postioma di Paese (Treviso) (IT)
(72) Inventor: Basso, Francesco, 31040 Postioma di Paese (Treviso) (IT)
(74) Representative: Agostini, Agostino

(56) References cited:
- EP-A- 0 648 644
- FR-A- 1 038 120
- FR-A- 2 804 644
- FR-A- 2 812 254
- US-A- 3 146 013

## Description

The present invention refers to a shock-damping buffer arrangement adapted for use both on means of transport, in particular road haulage vehicles, and stationary facilities (eg. platforms, warehouse entrances, and the like), where goods are generally loaded and unloaded. Anyway, although reference is made in the following description to a lorry provided with an enclosed, freight car, and a loading/unloading platform, this shall by no means be intended as to set any limit to the application scope of the arrangement itself.

It is generally known that lorries of the above cited kind are provided with a rear full-height door, i.e. a door extending over the full height of the lorry so as to enable the lift trucks to enter into and move even inside the enclosed freight car. For this and also a number of other reasons connected with the handling of goods, it is necessary that the rear portion of the lorry to stop against the loading/unloading platform at least in correspondence of the terminal edge of the car deck. During loading and unloading operations, however, the car deck of the lorry unavoidably undergoes variations in its height for a number of reasons, such as a heavier or lighter load imposed to the lorry suspensions to say the least. As a result, the above-mentioned terminal edge of the car deck is caused to rub against the stationary loading/unloading platform, so that both the car deck edge and the matching edge of the loading/unloading platform, eventually suffer definite damages after a certain number of goods loading and unloading operations.

A solution to these problems has been proposed with the shock-damping buffer arrangement disclosed in the European patent EP-A-0 648 644. This arrangement, which is characterized by a really remarkable simplicity in the construction thereof, makes use of one or more cylindrical buffers of rubber or some other material of similar damping properties. These buffers are mounted on a horizontal rotating axle that is supported by a rigid frame welded on or attached by means of bolts to the rear edges of the enclosed freight car of the lorry and/or to those portions of the stationary loading/unloading platform approached by the lorries whenever goods loading and unloading operations are to be carried out. Actually, this arrangement is effective in counteracting the aforementioned rubbing effects, owing to the fact that the friction force causes the cylindrical buffers to rotate either in a direction or in the opposite one, as the case may be.

The fact should however be taken into due account that, when the lorry stops against the loading/unloading platform, it may more or less severely hit the same platform, such as for instance in the case of unskilful manoeuvring by the driver or difficult ambient conditions. In such circumstances, the above-mentioned prior-art buffer arrangement proves quite less effective. In fact, in the case that the buffers are made of a soft rubber compound, so as to be able to undergo considerable elastic deformation stresses, they unavoidably have a limited life and must therefore be replaced quite frequently. If, on the contrary, the buffers are made of a very hard rubber compound, the arrangement itself will have a reduced shock-absorbing ability owing to the rigidity of the support frame.

It therefore is a main object of the present invention to provide an improved shock-damping buffer arrangement that proves very effective not only against the rubbing effects, but also against shocks and collisions, so as to fully do away with the above-mentioned drawbacks of prior-art solutions. Another object of the invention is to provide a buffer arrangement of a high mechanical reliability, namely that can be used for a long time, and adapted to be manufactured in a simple manner at a low cost.

According to the present invention, these objects, along with further ones that will be apparent in the following description, are reached in a shock-damping buffer arrangement, to be attached at will on to the lorry itself, rather than on to the stationary loading/unloading platform, in which said arrangement comprises one or more cylindrical bumpers that are pivoted on to a rigid frame according to a horizontal axis, and is characterized in that the bumpers are made of totally or partially polymeric material having a hardness of approximately 50 Shore D or greater, and in that between at least one of these bumpers and the rigid support frame there are provided elastically deformable means which, in the event of an impact of the transport means against the loading/unloading platform, enable the bumpers to temporarily displace with respect to the frame in a direction that is substantially perpendicular to the hinging-on axis of the bumpers themselves.

Anyway, features and advantages of the present invention will be more readily understood from the description of some embodiments of the present invention that is given below by way of nonlimiting example with reference to the accompanying drawings, in which:
- Figure 1 is a side view of the buffer arrangement according to the present invention in a first embodiment thereof, as installed in a lorry stopping against a goods loading/unloading platform;
- Figure 2 is a front view of the embodiment shown in Figure 1;
- Figure 3 is a perspective view of a detail, which is referred to here as the sliding fulcrum, of the arrangement shown in Figures 1 and 2;
- Figure 4 is a side view of the buffer arrangement according to the present invention in a second embodiment thereof;
- Figure 5 is a front, partially cross-sectional view of the embodiment shown in Figure 4;
- Figure 6 is a side view of the buffer arrangement according to the present invention in a third embodiment thereof;
- Figure 7 is a partial front view of the embodiment shown in Figure 6.

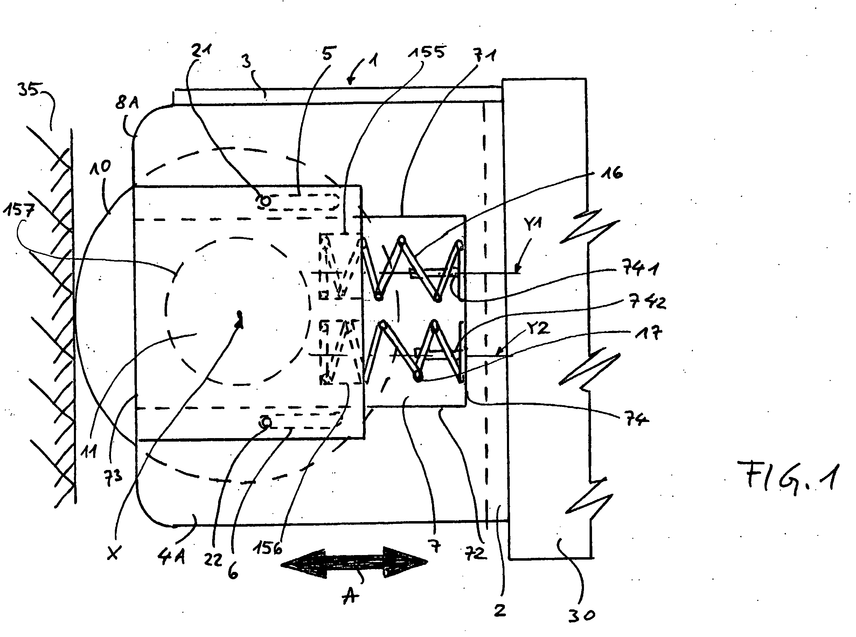

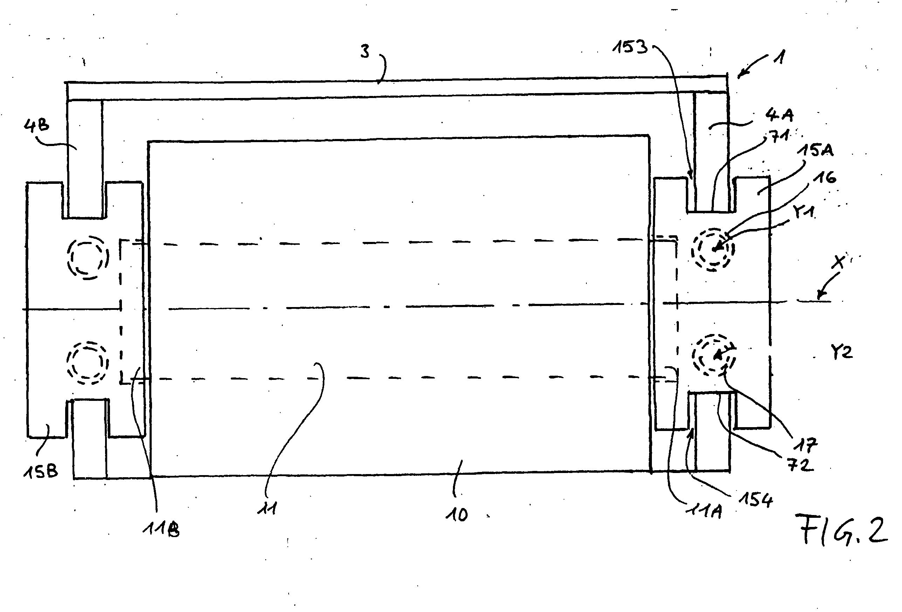

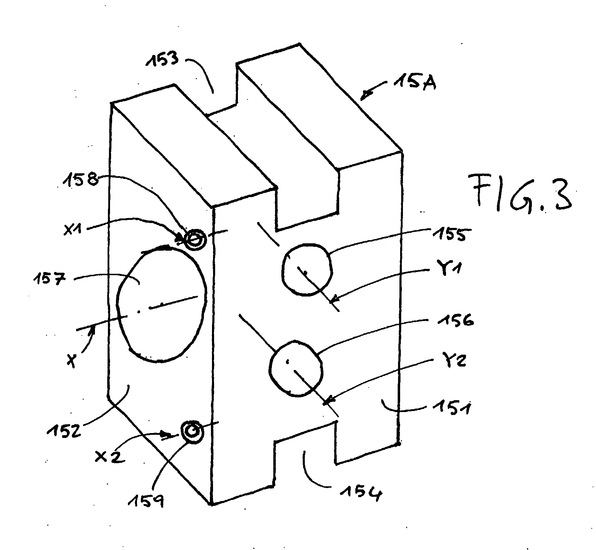

In the buffer arrangement shown in Figures 1 and 2, the reference numerals 1 and 10 are used to indicate a rigid frame for the attachment of the buffer arrangement on to the terminal edge 30 of the car deck of a van, or lorry, and a cylindrical bumper pivoted on to said frame 1 according to a horizontal axis X, respectively. The frame 1, which is preferably made by punching, folding and welding from a cold-galvanized sheet-steel blank, is substantially in the shape of a parallelepiped, since it comprises: a rear wall 2, provided with the apertures for the bolts (not shown, for reasons of greater simplicity) used for attachment to the edge 30; an upper wall 3; and two side walls or wings 4A and 4B, which are perpendicular to the walls 2 and 3. Each such wing is provided with a pair of elongated slots and, therebetween, a rectangular window. In particular, the wing 4A, which is shown in Figure 1, is provided with an upper slot 5 and a lower slot 6 extending parallel to the upper wall 3 and a window 7. The two long sides 71 and 72 of the window 7 are parallel to the slots 5 and 6, a first short side 73 is open at the front edge 8A of the wing 4A, whereas the fourth side 74, which lies parallel to and in proximity of the rear wall 2, is worked out so as to form two pins 741 and 742 that extend parallel to the sides 71 and 72.

According to a major feature of the present invention, the bumper 10 is in turn made of one or more totally or partially polymeric materials, so as to have a very high relative hardness, starting from at least 50 Shore D, such as for instance in the case of compact polyurethane. In this manner, unlike the buffers used in the prior-art arrangement mentioned above, the bumper is in this case substantially rigid, but, on the other hand, very strong and resistant mechanically, even as far as abrasion is concerned. A rigid shaft 11 extends through the bumper 10, the end portions 11A and 11B of shaft 11 being supported by two rigid blocks 15A and 15B, which will be referred to as sliding fulcra here owing to their particular function, as described in greater detail further on. This shaft 11 is able to rotate freely about its axis X, but is prevented from displacing along the same axis.

Considering that sliding fulcra 15A and 15B are specularly similar in their construction and perform the same function, for reasons of greater simplicity the following description will only cover and refer to the sliding fulcrum 15A, which is best shown in Figures 1 and 3. This sliding fulcrum 15A is preferably obtained from a steel bar of a rectangular cross section, which is machined so as to provide:
- in the face 152, which is one of the major faces,
   - a wide blind hole 157, which performs both as the support and the retaining member for the shaft 11, and therefore has a slightly larger diameter than the end portion 11A of such a shaft 11, and
   - two threaded through-holes 158 and 159 lying above and below said blind hole 157, respectively, the axes X1 and X2 of the holes 158 and 159 being parallel to the axis X of the wider blind hole 157;
- in a first pair of mutually opposing faces, of which the one indicated at 151 is shown in Figure 3,
   - two further blind parallel holes 155 and 156, which have a diameter suitably bigger than the threaded through-holes 158 and 159 even if smaller diameter than the blind hole 157, the axes Y1 and Y2 of the holes 155 and 156 being parallel with respect to each other and defining a plane perpendicular to the already referred axes X, X1 and X2;
- in the remaining pair of mutually opposing faces,
   - a pair of U-shaped grooves 153 and 154, whose plane of symmetry is the one defined by the axes Y1 and Y2, the grooves 153 and 154 having a width that is slightly larger than the thickness of the sheet-steel blank used to make the wings 4A and 4B of the frame 1.

Guide pins 21 and 22, which are so sized as to be able to slide in the slots 5 and 6 of the wing 4A, and which serve the purpose of enabling said wing 4A of the frame to retain the fulcrum 15A, are screwed into the holes 158 and 159. In the smaller blind holes 155 and 156 there are accommodated the first end portions of two helical springs 16 and 17, the second end portions of which, as guided by the pins 741 and 742, bear against the rear side 74 of the window 7 (see Figure 1).

Thanks to such a construction, at least the major component of the force of the shock between the lorry (shown schematically by its edge 30 in Figure 1) and the stationary goods loading/unloading platform (shown schematically by its vertical wall 35 in the same Figure) is damped by the springs 16 and 17 which extend along the axes Y1 and Y2, so that the bumper 10 has the possibility of temporarily displacing back and forth perpendicularly to the axis X, so as indicated by the double arrow A in Figure 1. Actually, the fulcra 15A and 15B, in which the blind holes 157 perform as supports for the shaft 11, slide elastically along the sides 71 and 72 of the window 7 of the wing 4A of the frame 1, which cooperate with the grooves 153 and 154 extending parallel thereto. The bumper 10 itself remains of course fully capable of rotating about the axis X, owing to the fact that there is provided a radial clearance between the end portions 11 A and 11B of the shaft 11 and the blind holes 157 and/or owing to the fact that there is provided a radial play between the shaft 11 itself and the bumper 10.

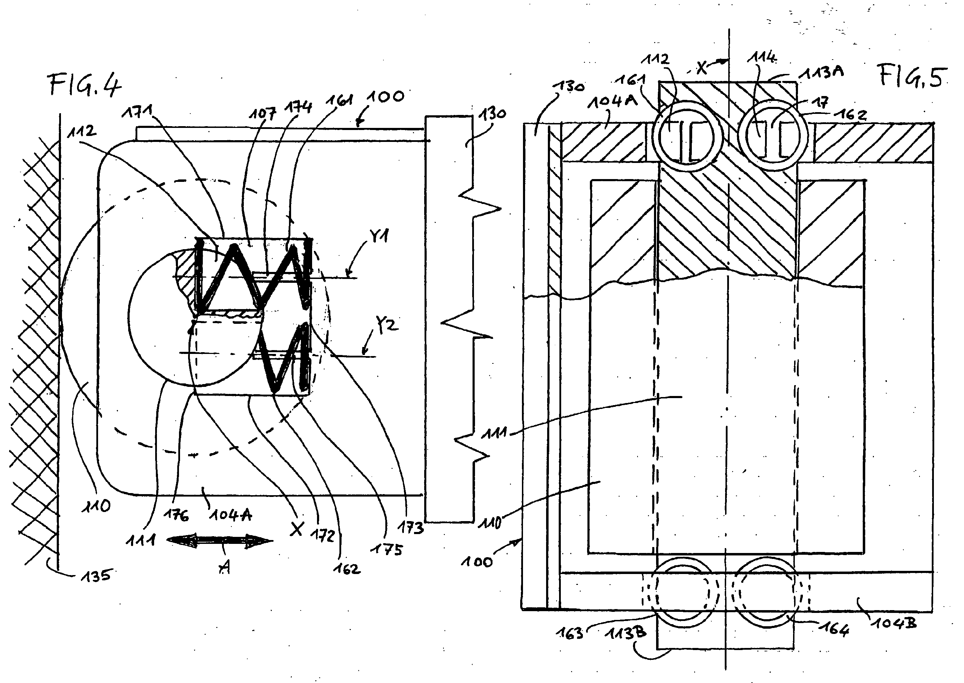

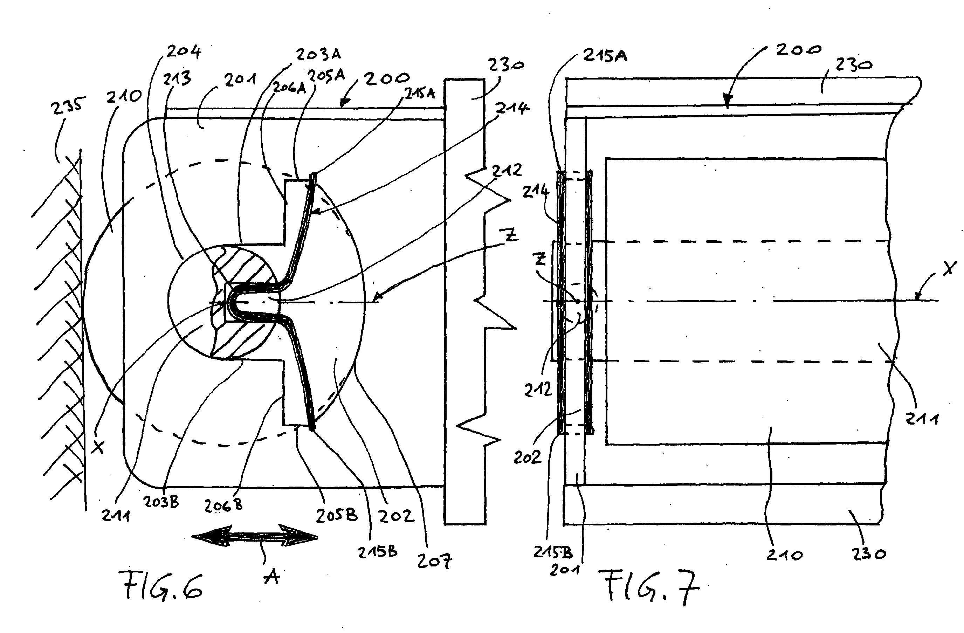

A second embodiment of the arrangement according to the present invention, which is shown in Figures 4 and 5, comprises again a frame 100 for attachment to the freight deck 130 of a van or lorry, as well as a bumper 110. Both these parts are practically similar to the ones described with reference to Figures 1 and 2, so that it appears more than adequate if only those parts of this embodiment will now be described which show some differences and are simpler and lower-cost in their construction with respect to their counterparts considered in connection with the preceding embodiment.

A first difference lies in the fact that the bumper 110, although being provided freely rotatable about the axis X, is mounted with a slight clearance on the item that is indicated at 111 and is actually more of a axle than a shaft, owing to its being fixed. A second difference lies in the fact that the axle 111 has two seats, each one of which is defined by two perpendicular planes, located at a certain distance from both end portions 113A and 113B thereof, namely in correspondence of the wings 104A and 104B. In Figure 4, reference numeral 112 is used to indicate one of the two seats that are provided near the end portion 113A of axle 111, i.e. in correspondence of the wing 104A, a cross-sectional view of which is shown in Figure 5. The first one of the planes that define the seat 112 is a plane lying parallel to the long sides 171 and 172 of the rectangular window 107 provided in the same wing 104A. The third difference derives from the fact that the windows such as the one indicated at 107, although they still have the rear side 173 thereof worked out so as to form two pins 174 and 175 that extend parallel to the long sides 171 and 172, is closed even on the front, in correspondence of its fourth side 176.

A last difference lies in the fact that the springs 161, 162, 163 and 164 - the purpose of which is to dampen the shocks lorry, as identified schematically by its edge 130, stops against the loading/unloading platform 135, since they enable the bumper to slide back and forth (so as indicated by the double arrow A in Figure 4) - directly connect the axle 111 with the wings 104A and 104B of the frame 100, owing to their seats being actually constituted by the same windows as the one indicated at 107, which are provided in said wings, while the guide members thereof are constituted by the pins 174 and 175.

Even in connection with a further embodiment of the arrangement according to the present invention, which is shown in Figures 6 and 7, which is even simpler and of a lower cost in its construction than the preceding embodiments, and which comprises again a frame 200 for attachment to the freight deck 230 of a lorry and a bumper 210 - mounted on a axle 211 - that are practically similar to the ones described with reference to the previously considered Figures, only those parts of the arrangement which show some differences will now be described.

The first difference lies in the fact that the wings of the frame 200, of which only the one indicated at 201 is actually shown in Figures 6 and 7, are provided with a window 202 which is roughly in the shape of a T. This window consists of a first portion, which features two parallel sides 203A and 203B and a third side in the shape of a semicircle 204, and a second portion featuring two parallel sides 205A and 205B, two sides 206A and 206B intersecting at an angle of 90° the sides 203A and 203B of said first portion, as well as a terminal side 207 in the shape of an arc of a circle.

The second difference derives from the fact that, in correspondence of each one of the frame wings, such as the one indicated at 201 in the Figures, the axle 211 - further to a circumferential groove (not shown) adapted to be retained by the semicircle-shaped side 204 of the window 202, which therefore acts as a support - is also provided with a circular hole 212, the axis Z of which is perpendicular to the axis of rotation X of the bumper 210. In this hole 212 there is accommodated the fulcrum 213 of a leaf spring 214 obtained from music steel strip, so that the U-shaped end portions 215A and 215B, which are guided along the sides 205A and 2058 of the window 202, are able to move into stopping against the terminal side 207 in the shape of an arc of a circle of the same window 202 (see Figure 7).

In this manner, in case of a shock against the loading/unloading platform, the bumper 210, further to rotating about its axis X, is also able to displace back and forth - as indicated by the double arrow A in Figure 6 - along the sides 203A and 203B acting as guide members of the window 202, since the end portions 215A and 215B of the leaf spring 214 are contrasted elastically by the terminal side 207 in the shape of an arc of a circle of the same window 202.

Fully apparent from the above description are the advantages provided by the arrangement according to the present invention, which may be summarized as follows:
- the possibility for even particularly heavy shocks to be damped without any damage by the arrangement of the invention, owing to the fact that elastic means are in all cases provided between the bumpers and the frame, these elastic means being constituted by: the springs 16 and 17 in the embodiment shown in Figures 1 to 3; the springs 161,162,163 and 164 in the embodiment shown in Figures 4 and 5; the leaf spring 214 in the embodiment shown in Figures 6 and 7, Thanks to such elastic means, at the moment of a shock the bumpers are caused to temporarily displace in the direction indicated by the double arrow A, i.e. in a direction that is perpendicular to the axis of rotation of the same bumpers;
- the possibility for the bumpers themselves to be made of hard, abrasion-resistant materials ensuring a far longer life than the one of currently available arrangements, since the actual shock-damping capability is no longer relying on the bumpers, but rather on the above-mentioned elastic means;
- the simplicity and, therefore, the lower cost of the construction of the buffer arrangement of the invention, at least in some of the embodiments thereof.

It should finally be noticed that, without departing from the scope of the present invention, as defined by the appended claims, further embodiments and variants of this buffer arrangement may well be developed, so as shown by the examples considered below.

In the first place, the buffer arrangement may be mounted (also) on the loading/unloading platform or any other stationary facility provided in view of loading and unloading goods.

In the second place, the arrangement may be provided with more than a single bumper, in which these bumpers may then be pivoted on a single axis or more parallel axes. In this case, it will not be necessary for all of the individual bumpers pivoted on a same axis to be provided with elastic means for connection with the frame, since only those lying adjacent to the wings of the same frame need to be so provided.

In the third place, the bumpers may be provided with simple end supports, instead of through-passing support shafts.

In the fourth place, the use of hard polymeric materials may be limited to the outer surface, as well as a layer lying therebelow, of the bumpers.

## Claims

1. Shock-damping buffer arrangement, adapted to be attached at will to a means of transport (30; 130; 230), rather than the platform or other similar facility (35; 135; 235) for loading and unloading goods, comprising one or more cylindrical bumpers (10; 110; 210) pivoted on a rigid frame (1; 100; 200) according to a horizontal axis (X), **characterized in that** at least the outer surface of the bumpers (10; 110; 210) is made of partially or totally polymeric materials having a hardness of approximately 50 Shore D or greater, and **in that** between at least one of the bumpers (10; 110; 210) and the frame (1; 100; 200) there are provided elastically deformable means (16,17; 161, 162, 163, 164; 214) which, in the event of said means of transport (30; 130; 230) stopping against said platform (35; 135; 235), cause the bumpers to temporarily displace with respect to the frame in a direction (A) that is substantially perpendicular to the pivoting axis (X) of the same bumpers.

2. Shock-damping buffer arrangement according to claim 1, **characterized in that** the end portions (11A, 11B) of the shaft (11) that extends longitudinally through the bumpers (10), or the end supports of the bumpers (10), as the case may be, are accommodated in rigid support members (15A,15B) that are mounted slidably in female seats or windows (7) provided in walls (4A, 4B) of the frame (1) perpendicularly to said pivoting axis (X) of the bumpers.

3. Shock-damping buffer arrangement according to claim 2, **characterized in that** at least one of said rigid support members (15A, 15B) is retained by the corresponding wall (4A) of the frame (1) by means of at least one spring (16, 17) that is capable of deforming elastically according to an axis (Y1, Y2) extending perpendicularly to the pivoting axis (X) of the bumpers.

4. Shock-damping buffer arrangement according to claim 3, **characterized in that** said at least one spring (16, 17) has an end portion accommodated in a blind hole (155, 156) provided in the corresponding rigid support member (15A, 15B), and the other end portion abutting against the rear side (74) of said female seat or window (7).

5. Shock-damping buffer arrangement according to claim 3 or 4, **characterized in that** said rigid support members (15A, 15B) are also guided by rail-like groove means (153, 154) provided to cooperate with mutually opposing sides (71, 72) of the corresponding female seats or windows (7), and preferably also by means of guide pins (21, 22) provided slidably in corresponding slots (5, 6) of said walls (4A, 4B) of the frame (1) that are perpendicular to said pivoting axis (X) of the bumpers.

6. Shock-damping buffer arrangement according to claim 1, **characterized in that** said at least a bumper (110) is mounted in a freely rotatable manner on a axle (111), which is provided in proximity of its end portions (113A, 113B) with seats (112, 114) to accommodate as many springs (161, 162, 163,164), which are retained by walls (104A, 104B) of the frame (100) and are capable of deforming elastically according to axes (Y1, Y2) that are perpendicular to the pivoting axis (X) of the bumpers (110).

7. Shock-damping buffer arrangement according to claim 1, **characterized in that** said at least a bumper (210) is mounted in a freely rotatable manner on an axle (211), which is provided in proximity of its end portions (113A, 113B) with seats (212) adapted to allow for the fulcrum (213) of leaf springs (214) to slide along axes that are perpendicular to the pivoting axis (X) of the bumpers (210), in which the end portions (215A, 215B) of said leaf springs are abutting against corresponding terminal sides (207) of female seats or windows (202) provided in walls (201) of the frame (200) that are also perpendicular to the pivoting axis (X) of the bumpers (210).

## Patentansprüche

1. Stoßdämpfende Puffereinrichtung, dazu geeignet nach Belieben eher an einem Transportmittel (30; 130; 230) angebracht zu werden als an der Rampe oder einer anderen ähnlichen Anlage (35; 135; 235) zum Laden und Entladen von Gütern, welche einen oder mehrere an einem starren Gehäuse (1; 100; 200) entsprechend einer horizontalen Achse (X) drehbar gelagerte zylindrische Puffer (10; 110; 210) aufweist, **dadurch gekennzeichnet, dass** zumindest die äußere Oberfläche der Puffer (10; 110; 210) aus teilweise oder vollständig polymeren Materialien mit einer Härte von ungefähr 50 Shore D oder größer hergestellt ist und dass zwischen mindestens einem der Puffer (10; 110; 210) und dem Gehäuse (1; 100; 200) elastisch verformbare Mittel (16, 17; 161, 162, 163, 164; 214) vorgesehen sind, welche im Falle des Stoppens des Transportmittels (30; 130; 230) an der Rampe (35; 135; 235) eine zeitweise Versetzung der Puffer bezüglich des Gehäuses in einer Richtung (A) verursachen, die im Wesentlichen senkrecht zu der Drehachse (X) derselben Puffer ist.

2. Stoßdämpfende Puffereinrichtung gemäß Anspruch 1, **dadurch gekennzeichnet, dass** die Endabschnitte (11A, 11B) der Achse (11), die sich der Länge nach durch die Puffer (10) erstreckt, bzw. die Stirnlager der Puffer (10) in starren Stützteilen (15A, 15B) untergebracht sind, die verschiebbar in Buchsenaufnahmen oder Fenstern (7) angebracht sind, welche in Wänden (4A, 4B) des Gehäuses (1) senkrecht zu der Drehachse (X) der Puffer vorgesehen sind.

3. Stoßdämpfende Puffereinrichtung gemäß Anspruch 2, **dadurch gekennzeichnet, dass** zumindest eines der starren Stützteile (15A, 15B) durch die entsprechende Wand (4A) des Gehäuses (1) mittels zumindest einer Feder (16, 17), die in der Lage ist, sich elastisch entsprechend einer Achse (Y1, Y2) zu verformen, welche sich senkrecht zu der Drehachse (X) der Puffer erstreckt, gehalten wird.

4. Stoßdämpfende Puffereinrichtung gemäß Anspruch 3, **dadurch gekennzeichnet, dass** die zumindest eine Feder (16, 17) einen Endabschnitt aufweist, der in einem Sackloch (155, 156) untergebracht ist, welches in dem entsprechenden starren Stützteil (15A, 15B) vorgesehen ist, und der andere Endabschnitt gegen die Rückseite (74) der Buchsenaufnahme oder des Fensters (7) stößt.

5. Stoßdämpfende Puffereinrichtung gemäß Anspruch 3 oder 4, **dadurch gekennzeichnet, dass** die starren Stützteile (15A, 15B) ebenfalls durch schienenartige Kerbenmittel (153, 154) geführt werden, die derart vorgesehen sind, dass sie mit einander gegenüberliegenden Seiten (71, 72) der entsprechenden Buchsenaufnahmen oder Fenster (7) zusammenwirken, und vorzugsweise ebenfalls durch Führungsstifte (21, 22), die in entsprechenden Schlitzen (5, 6) der Wände (4A, 4B) des Gehäuses (1), welche senkrecht zu der Drehachse (X) der Puffer sind, verschiebbar vorgesehen sind.

6. Stoßdämpfende Puffereinrichtung gemäß Anspruch 1, **dadurch gekennzeichnet, dass** der zumindest eine Puffer (110) in frei drehbarer Weise auf einer Welle (111) angebracht ist, welche nahe ihren Endabschnitten (113A, 113B) mit Aufnahmen (112, 114) versehen ist zum Unterbringen von so vielen Federn (161, 162, 163, 164), die durch Wände (104A, 104B) des Gehäuses (100) gehalten werden und in der Lage sind, sich entsprechend der Achsen (Y1, Y2), welche senkrecht zu der Drehachse (X) der Puffer (110) sind, elastisch zu deformieren.

7. Stoßdämpfende Puffereinrichtung gemäß Anspruch 1, **dadurch gekennzeichnet, dass** der zumindest eine Puffer (210) in frei drehbarer Weise auf einer Welle (211) angebracht ist, die in der Nähe ihrer Endabschnitte (113A, 113B) mit Aufnahmen (212) versehen ist, welche so ausgelegt sind, dass sie ein Gleiten der Drehachse (213) der Blattfedern (214) entlang von Achsen gestatten, die senkrecht zu der Drehachse (X) der Puffer (210) sind, wobei die Endabschnitte (215A, 215B) der Blattfedern gegen die entsprechenden endständigen Seiten (207) der Buchsenaufnahmen oder Fenster (202) stoßen, die in den Wänden (201) des Gehäuses (200) vorgesehen sind, welche ebenfalls senkrecht zu der Drehachse (X) der Puffer (210) sind.

## Revendications

1. Dispositif de butoir amortisseur, adapté pour être fixé à volonté sur un moyen de transport (30 ; 130 ; 230) plutôt que sur la plate-forme ou un autre équipement similaire (35 ; 135 ; 235) pour le chargement et le déchargement des marchandises, comprenant un ou plusieurs tampons cylindriques (10 ; 110 ; 210) montés pivotants sur un châssis rigide (1 ; 100 ; 200) selon un axe horizontal (X), **caractérisé en ce qu'**au moins la surface externe des tampons (10 ; 110; 210) est réalisée avec des matériaux partiellement ou totalement polymères ayant une dureté d'environ 50 Shore D ou supérieure, et **en ce qu'**entre au moins l'un des tampons (10 ; 110 ; 210) et le châssis (1 ; 100 ; 200), on prévoit des moyens élastiquement déformables (16, 17 ; 161, 162, 163, 164 ; 214), qui, dans le cas où ledit moyen de transport (30 ; 130 ; 230) s'arrête contre ladite plate-forme (35 ; 135 ; 235), provoquent le déplacement temporaire des tampons par rapport au châssis dans une direction (A) qui est sensiblement perpendiculaire à l'axe de pivotement (X) des mêmes tampons.

2. Dispositif de butoir amortisseur selon la revendication 1, **caractérisé en ce que** les parties d'extrémité (11A, 11B) de l'arbre (11) qui s'étend longitudinalement en passant par les tampons (10), ou le support d'extrémité des tampons (10), comme cela peut être le cas, sont logées dans des éléments de support rigide (15A, 15B) qui sont montés de manière coulissante dans des sièges femelles ou fenêtres (7) prévues dans les parois (4A, 4B) du châssis (1) perpendiculairement audit axe de pivotement (X) des tampons.

3. Dispositif de butoir amortisseur selon la revendication 2, **caractérisé en ce qu'**au moins l'un desdits éléments de support rigide (15A, 15B) est retenu par la paroi (4A) correspondante du châssis (1) au moyen d'au moins un ressort (16, 17) qui est capable de se déformer élastiquement selon un axe (Y1, Y2) s'étendant perpendiculairement à l'axe de pivotement (X) des tampons.

4. Dispositif de butoir amortisseur selon la revendication 3, **caractérisé en ce que** ledit au moins un ressort (16, 17) a une partie d'extrémité logée dans un trou borgne (155, 156) prévu dans l'élément de support rigide (15A, 15B) correspondant, et l'autre partie d'extrémité venant en butée contre le côté arrière (74) dudit siège femelle ou fenêtre (7).

5. Dispositif de butoir amortisseur selon la revendication 3 ou 4, **caractérisé en ce que** lesdits éléments de support rigide (15A, 15B) sont également guidés par des moyens de rainure en forme de rail (153, 154) prévus pour coopérer avec des côtés mutuellement opposés (71, 72) des sièges femelles ou fenêtres (7) correspondants et de préférence également au moyen de broches de guidage (21, 22) prévues de manière coulissante dans des fentes (5, 6) correspondantes desdites parois (4A, 4B) du châssis (1) qui sont perpendiculaires audit axe de pivotement (X) des tampons.

6. Dispositif de butoir amortisseur selon la revendication 1, **caractérisé en ce que** ledit au moins un tampon (110) est monté d'une manière librement rotative sur un essieu (111), qui est prévu à proximité de ses parties d'extrémité (113A, 113B) avec des sièges (112, 114) pour loger autant de ressorts (161, 162, 163, 164) qui sont retenus par les parois (104A, 104B) du châssis (100) et qui sont capables de se déformer élastiquement selon les axes (Y1, Y2) qui sont perpendiculaires à l'axe de pivotement (X) des tampons (110).

7. Dispositif de butoir amortisseur selon la revendication 1, **caractérisé en ce que** ledit au moins un tampon (210) est monté d'une manière librement rotative sur un essieu (211), qui est prévu à proximité de ses parties d'extrémité (113A, 113B) avec des sièges (212) adaptés pour permettre au pivot (213) des ressorts à lames (214) de coulisser le long des axes qui sont perpendiculaires à l'axe de pivotement (X) des tampons (210), dans lequel les parties d'extrémité (215A, 215B) desdits ressorts à lames viennent en butée contre les côtés d'extrémité (207) correspondants des sièges femelles ou fenêtres (202) prévus dans les parois (201) du châssis (200) qui sont également perpendiculaires à l'axe de pivotement (X) des tampons (210).
